# EUROPÄISCHE PATENTSCHRIFT

(11) **EP 4 074 486 B1**
(45) Veröffentlichungstag und Bekanntmachung des Hinweises auf die Patenterteilung: **13.11.2024**
(21) Anmeldenummer: 22165179.7
(22) Anmeldetag: 29.03.2022
(51) Int. Cl.: B29C 45/14, B62D 29/00, H01Q 1/42, B29C 65/48, B29K 69/00, B29L 31/30, B60R 13/00, G01S 13/931, H01Q 1/32

(54) **VERFAHREN ZUM HERSTELLEN VON BAUTEILEN EINER AUSSENHAUT EINES FAHRZEUGS**
METHOD FOR MANUFACTURING COMPONENTS OF AN OUTER SKIN OF A VEHICLE
PROCÉDÉ DE FABRICATION DE COMPOSANTS D'UNE TÔLE EXTÉRIEURE D'UN VÉHICULE

(30) Priorität: 12.04.2021 DE 102021203582
(43) Veröffentlichungstag der Anmeldung: 19.10.2022
(73) Patentinhaber: Magna Exteriors GmbH, 63877 Sailauf (DE)
(72) Erfinder: GÖTZELMANN, Johannes, 97237 Altertheim (DE); MÜNKER, Klaus, 83556 Griesstätt (DE)
(74) Vertreter: Rausch, Gabriele

(56) Entgegenhaltungen:
- CN-A- 109 648 781
- DE-A1- 102009 017 698
- US-A1- 2005 168 374
- US-A1- 2007 210 979
- US-A1- 2017 190 083

## Beschreibung

Die Erfindung betrifft ein Verfahren zum Herstellen von Bauteilen einer Außenhaut eines Fahrzeugs mit einer Folie, die zumindest von einer Seite mit klarem Kunststoffmaterial hinterspritzt wird, wobei die Folie einem Tiefziehprozess unterzogen wird, um die gewünschte dreidimensionale Form zu erzeugen und die Folie weiteren Schritten zur Vorbereitung der Hinterspritzung unterzogen wird, wobei die Folie mindestens teilweise mit einer Farbschicht versehen wird, und die Folie Bereiche aufweist, die für das Durchscheinen anderer Farben, oder Durchdringen von elektromagnetischen Wellen vorgesehen sind.

### Stand der Technik

Durch die zunehmende Verbreitung von elektrischen Fahrzeugen ändern sich die Anforderungen an Frontpanel, da keine Kühlereintrittsöffnungen in demselben Maß wie für Verbrennungsmotoren gefordert sind.

Frontpanele in elektrischen Fahrzeugen bekommen mehr und mehr geschlossene Kühlerverkleidungen, was eine bessere Aerodynamik des Fahrzeugs bei gleichzeitig weniger Kühlluftbedarf entspricht.

Frontpanele werden häufig aus transparentem Polycarbonat gefertigt und mit geeigneten Dekorationselementen oder auch Funktionselementen versehen.

Im Stand der Technik werden Frontpanele im Spitzguss im 2K-Verfahren hergestellt. Die Rückseite, also die Fahrzeuginnenseite des Panels, wird anschließend lackiert, wobei die Vorderseite, also die Außenseite des Fahrzeugs, vor Lackierung geschützt werden muss. Dazu wird die Vorderseite maskiert.

Zur Herstellung von Strukturen werden eingeprägter Geometrien des Frontpanel mit einem Laser freigelegt. Anschließend erfolgt eine Beschichtung der Innenseite mit einem physikalischen Gasabscheideverfahren. PVD, um einen

Chromeffekt bei gleichzeitiger Radar- und Lichttransparenz zu bekommen.

Die Vorderseite erhält eine Hartlackbeschichtung.

Diese Verfahren erfordert eine Vielzahl aufeinanderfolgender Prozesse, die alle individuelle Ausschusszahlen haben und den gesamten Ausschuss, sowie die Bauteilkosten erhöhen.

DE 10 2006 046 436 B3 zeigt ein Abdeckelement, das eine Folie ist, die tiefgezogen und lackiert werden kann. Diese wird mit Kunststoff überspritzt, und zwar beidseitig. Die Folie ist dabei metallisiert, wobei im Paragraf 15 ausgeführt ist, dass diese Schicht so dünn sein muss, damit sie für elektromagnetische Wellen, wie die Radarsignale, transparent ist. Es sind daher ausdrücklich keine Bereiche mit Ausstanzungen vorgesehen. Auch ein Durchscheinen von in Öffnungen vorgesehenen Bauteilen erfolgt nicht.

DE 602 10 178 T2 zeigt die Folienherstellung für ein Mobiltelefon. Die Folie wird gelocht, damit Tasten etc. die Folie durchdringen können. Es geht nicht um das Durchscheinen von Bauteilen verschiedener Farbe oder verschiedener elektromagnetischer Sender.

US 6 241 153 B1 zeigt einen verklebten Sensor, der in einer Smartcard verbaut ist.

DE 10 2009 017 698 A1 zeigt ein Verfahren zur Herstellung eines Fahrzeug-Bauteils mit den Verfahrensschritten:
- Bereitstellen einer Bauteil-Form,
- Anpassen einer Folie an die Form, wobei die Folie ein Loch mit vorgegebener Kontur aufweist,
- Einlegen der Folie in die Form,
- zumindest teilweises Hinterfüllen der Folie in der Form mit mindestens einer Kunststoffschicht, wobei das Hinterfüllen der Folie zumindest im Bereich des mindestens einen Loches mit einem transparenten Kunststoff erfolgt, derart dass das Loch mit dem transparentem Kunststoff zumindest teilweise gefüllt wird, sowie - Einbringen mindestens eines weiteren Elementes in den Bereich des Loches in die Bauteilform vor deren Befüllen, an welches der transparente Kunststoff zumindest teilweise anschließt.

Aus US 2017 / 190 083 A1 ist ein Herstellungsverfahren bekannt mit den Schritten: Einführen eines ersten Polymermaterials in eine Form, wobei das erste Polymermaterial einer Metallisierung widersteht; Einführen eines zweiten Polymermaterials in die Form, wobei das zweite Polymermaterial eine Metallisierung annimmt; Formen eines Artikels aus dem ersten Polymermaterial und dem zweiten Polymermaterial, Koppeln eines metallischen Materials an den Oberflächenabschnitt des Artikels, um ein Teil mit einer metallischen Oberflächenbeschaffenheit zu bilden.

CN 109 648 781 A1 offenbart eine In-Mold-Labeling-Technologie für ein Radom. Die Formetikettiertechnik umfasst den Schritt A des Materialschneidens, den Schritt B des Plandruckens, den Schritt C des Trocknens und Fixierens der Druckfarbe, den Schritt D des Auftragens einer Schutzschicht, den Schritt E des Stanzens eines Positionierungslochs, den Schritt E Schritt F des thermischen Formens, Schritt G des Formscherens, Schritt H des Spritzgießens und Schritt I der Oberflächenbehandlung des fertigen Produkts.

US 2005 / 168 374 A1 zeigt ein Formteil für den Strahlengang eines Radargeräts mit geringem Funkübertragungsverlust und verbesserter Härte und Abriebfestigkeit. Das Formteil für den Strahlengang des Radargeräts umfasst einen Grundkörper 1 aus einer Harzschicht und eine auf der Oberfläche des Grundkörpers angeordnete Glanzdekorschicht 2, wobei die Glanzdekorschicht aus Zinn und/oder einem Zinn besteht Legierung.

US 2007 / 210 979 A1 umfasst ein Näherungselement, das entlang eines Außenumfangs eines Übertragungselements für elektromagnetische Wellen angeordnet ist, das in einer Mitte der Komponente vorgesehen ist, die vor einer Radarvorrichtung angeordnet ist. Das Näherungselement enthält einen chromplattierten Abschnitt, der auf seiner Vorderfläche ausgebildet ist und eine elektromagnetische Welle reflektiert. Das Näherungselement ist aus einem Acrylat-Styrol-Acrylnitril-Harz oder einem modifizierten Polyphenylenoxid-Harz mit einem Dämpfungskoeffizienten für die Übertragung elektromagnetischer Wellen gebildet, der gleich oder größer als ein vorbestimmter Wert ist.

Es ist Aufgabe der Erfindung, ein Verfahren einzusetzen, das eine gleichwertiges Aussehen bei gleichzeitiger Reduzierung der Prozessschritte und Erhalt der Beleuchtungs- sowie Sensorintegrationsfunktion bereitstellt.

### Beschreibung der Erfindung

Die Aufgabe wird gelöst mit einem Verfahren zum Herstellen von Bauteilen einer Außenhaut eines Fahrzeugs mit einer Folie, die zumindest von einer Seite mit klarem Kunststoffmaterial hinterspritzt wird, wobei die Folie einem Tiefziehprozess unterzogen wird, um die gewünschte dreidimensionale Form zu erzeugen und die Folie weiteren Schritten zur Vorbereitung der Hinterspritzung unterzogen wird, wobei die Folie mindestens teilweise mit einer Farbschicht versehen wird, und die Folie Bereiche aufweist, die für das Durchscheinen anderer Farben, oder Durchdringen von elektromagnetischen Wellen vorgesehen sind.

Die elektromagnetischen Wellen können dabei im sichtbaren Bereich liegen und eine Beleuchtung darstellen. Auch Sensorsignale sollen damit umfasst sein, also beispielsweise Radarsignale.

Als Farben werden in diesem Zusammenhang auch metallische Beschichtungen wie beispielsweise eine Verchromung verstanden.

Das erfindungsgemäße Verfahren reduziert die Anzahl der Prozesse und weist somit Vorteile bezüglich der Zykluszeiten der Herstellung auf. Ganz unterschiedliche Design-Ideen lassen sich auf einfache Art integrieren.

Die Folie wird vor oder nach dem Tiefziehen mit einer Farbschicht versehen. Das erhöht die Flexibilität des Herstellungsprozesses.

In einer Ausführungsform ist die Folie eine metallisierte, chrom-ähnlich spiegelnde Folie.

In einer Ausführungsform werden die Bereiche durch Ausstanzungen aus der Folie vorbereitet.

Dadurch entstehen Aussparungen, in die später Bauteile eingesetzt werden, die ein farbiges und/oder leuchtendes Erscheinungsbild nach außen abgeben.

Diese Bauteile werden separat hergestellt und weisen die gewünschten Farb- oder Metalloberflächen auf. Bauteile können dabei eine Vielzahl von Lichtfunktionen oder Sensorfunktionen aufweisen

Verwendet man einen metallisierte, z.B. chrombeschichtete Folie werden die Bereiche durch selektives Bedrucken der Folie mit Farbe ausgebildet.

Die Bauteile werden in den Bereichen mit der Folie verbunden.

In einer Ausführungsform werden die Bauteile mit glasklarem Kleber mit der Folie zumindest an den Bereichen verbunden.

Alternativ werden die Bauteile durch Überspritzen mit einem klaren Kunststoffmaterial mit der Folie verbunden.

### Beschreibung der Figuren

Fig. 1 zeigt ein Schnittbild eines Aufbaus in einer ersten Ausführungsform vor der Montage von Bauteilen,
Fig. 2 zeigt ein Schnittbild eines Aufbaus in einer ersten Ausführungsform nach der Montage von Bauteilen,
Fig. 3 zeigt eine alternative Ausführungsform.

Um das Herstellungsverfahren für ein Frontpanel oder auch ein anderes Bauteils 1 einer Außenhaut eines Fahrzeugs zu verbessern, wird ein Verfahren verwendet, das mit einer hinterspritzten Folie arbeitet.

Als Basis dient eine Folie 2, die geeignet vorbereitet und mit einem glasklaren PC-Material überspritzt wird. In einer Ausführungsform kann diese Schicht teiltransparent eingefärbt werden und in einer anderen Ausführungsform aus PMMA geformt werden.

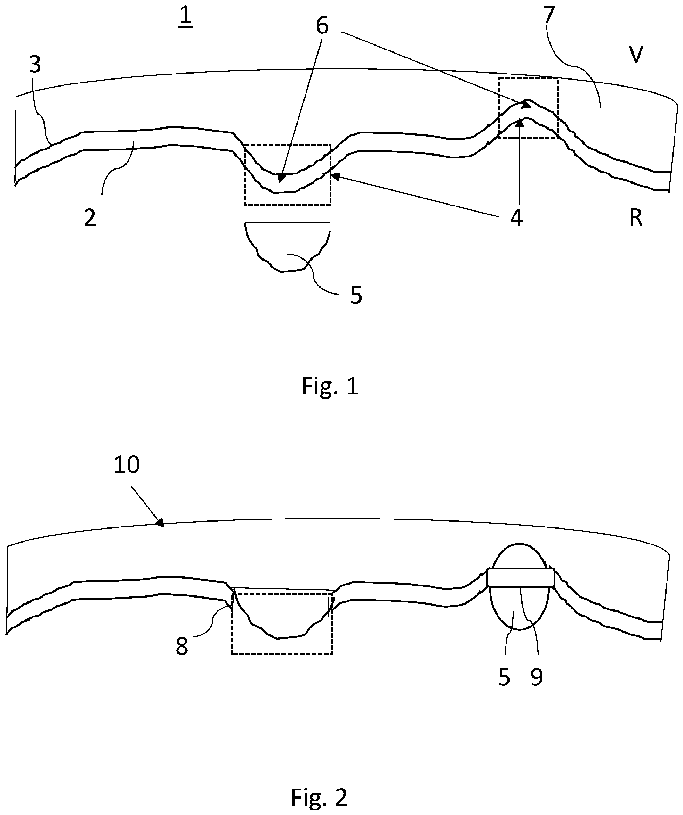

In einer ersten Ausführungsform nach den Fig. 1 und 2 wird die Folie 2 zunächst zu ihrer vordefinierten Form tiefgezogen und anschließend mit einer Farbe, zum Beispiel der Wagenfarbe, lackiert. Die Farbschicht 3 ist dabei auf der Seite der Folie angebracht, die später überspritzt wird.

Die lackierte, vorgeformte Folie 2 weist Bereiche 4 auf, auf. Diese sind dafür vorgesehen, später in einer anderen Farbe oder in einer Chromvariante durchleuchtet zu werden. Dazu müssen die Bereiche 4 in der Folie 2 ausgestanzt werden. Zunächst wird die vorbereitete farbige Folie 2 mit ihren Ausstanzungen 6 mit einer glasklaren PC-Schicht 7 überspritzt, in der sich dann die speziell eingeprägten Geometrien wiederfinden.

Bauteile 5, die entweder Funktionselement oder Dekorationselemente sind, sind den geometrischen Eindellungen oder Erhebungen angepasst und werden als separate Bauteile 5 hergestellt. Die Bauteile 5 können mit unterschiedlichen Farben, oder als verchromtes oder PVD beschichtetes Bauteil und/oder als Lichtleiter ausgeführt werden. Ihr Erscheinungsbild scheint durch die Stanzöffnungen der Folie 2 sowie der glasklaren Umspritzung, der PC-Schicht 7, durch und ist von außen also von der Vorderseite V sichtbar.

Die überspritzte Farbfolie 2 wird dann von der Rückseite R mit einem optisch durchsichtigen Kleber 8 zumindest in den Bereichen der Ausstanzungen 6 beschichtet und die Bauteile 5 werden eingepasst. Sollte es sich um größere oder komplexere Bauteile 5 handeln, kann die Halterung auch von einem separaten Halterahmen 9 von hinten mit dem Bauteil 5 und dem Kleber 8 verbunden werden. Das erleichtert die Montage von aktiven Bauteilen, die dann nach erfolgtem Herstellungsprozess nur noch in der Halterahmen eingepasst werden müssen.

In einer alternativen Ausführungsform wird die Folie 2 aus einer Chromfolie hergestellt. Die Chromfolie wird mit einem Siebdruckverfahren mit Farbe, der Wagenfarbe oder mit einer Kontrastfarbe, bedruckt, sodass die Bereiche 4, in denen Chrom sichtbar sein soll, ausgespart werden. Die Ausstanzungen können bei dieser Ausführung unterbleiben.

Die Folie 2 kann stets vor oder nach dem Tiefziehen mit der Farbschicht 3 versehen werden.

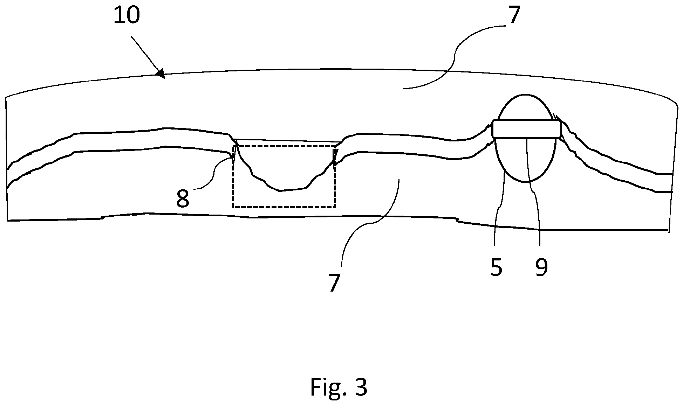

In einer weiteren alternativen Ausführungsform nach Figur 3 werden die getrennt hergestellten Bauteile 5 nicht geklebt, sondern in ein Spritzgusswerkzeug eingelegt und mit klarem PC-Material mit der Folie 2 überspritzt, so dass sich die Bauteile 5 mit der Folie 2 verbinden.

Wenn die Folie von hinten als auch von der Rückseite R hinterspritzt wird, kann die Farbschicht auch auf der zu Rückseite hin gelegenen Seite der Folie angebracht sein.

Bei allen Varianten mit einer Sichtseite aus Polycarbonat erfolgt eine Beschichtung mit einem Hartlack 10 von außen, der die PC-Schicht vor UV und Verkratzung schützt.

### Bezugszeichen

1 Bauteil einer Außenhaut eines Fahrzeugs
2 Folie
3 Farbschicht
4 Bereiche
5 Bauteile
6 Ausstanzungen
7 PC-Schicht
8 Kleber
9 Halterahmen
10 Hartlack

## Patentansprüche

1. Verfahren zum Herstellen von Bauteilen (1) einer Außenhaut eines Fahrzeugs mit einer Folie (2), die zumindest von einer Seite - Vorderseite (V) oder Rückseite (R) - mit klarem Kunststoffmaterial hinterspritzt wird, wobei die Folie (2) einem Tiefziehprozess unterzogen wird, um die gewünschte dreidimensionale Form zu erzeugen und die Folie (2) weiteren Schritten zur Vorbereitung der Hinterspritzung unterzogen wird,
- wobei die Folie (2) mindestens teilweise mit einer Farbschicht (3) versehen wird,
- und die Folie (2) Bereiche (4) aufweist, die für das Durchscheinen anderer Farben oder Durchdringen von elektromagnetischen Wellen vorgesehen sind, und die aus speziell eingeprägten Geometrien, wie Eindellungen, Erhebungen bestehen, wobei die Bereiche (4) durch Ausstanzungen (6) aus der Folie (2) vorbereitet werden,
- wobei die vorbereitete farbige Folie (2) zunächst mit ihren Ausstanzungen (6) mit einer glasklaren Kunststoffschicht (7) überspritzt wird, in der sich dann die speziell eingeprägten Geometrien wiederfinden,
- und in die Ausstanzungen (6) Bauteile (5) eingesetzt werden, die ein farbiges oder leuchtendes Erscheinungsbild nach außen abgeben, wobei die Bauteile (5) durch Ausstanzungen (6) der Folie (2) sowie der glasklaren Umspritzung der Folie (2) durchscheinen und von außen also von der Vorderseite (V) sichtbar sind.

2. Verfahren nach Anspruch 1, **dadurch gekennzeichnet, dass** die Folie (2) vor oder nach dem Tiefziehen mit einer Farbschicht (3) versehen wird.

3. Verfahren nach Anspruch 1, **dadurch gekennzeichnet, dass** die Folie (2) eine metallisierte Folie ist.

4. Verfahren nach Anspruch 3, **dadurch gekennzeichnet, dass** die Bereiche (4) durch selektives Bedrucken der Folie (2) mit Farbe ausgebildet werden.

5. Verfahren nach Anspruch 4, **dadurch gekennzeichnet, dass** Bauteile (5) in den Bereichen (4) mit der Folie (2) verbunden werden.

6. Verfahren nach Anspruch 1 oder 5, **dadurch gekennzeichnet, dass** die Bauteile (5) mit glasklarem Kleber (8) mit der Folie (2) zumindest an den Bereichen (4) verbunden werden.

7. Verfahren nach Anspruch 1 oder 5, **dadurch gekennzeichnet, dass** die Bauteile (5) durch Überspritzen mit einem klaren Kunststoffmaterial in einer PC- oder PMMA- Schicht (7) mit der Folie (2) verbunden werden.

8. Verfahren nach Anspruch 4 oder 5, **dadurch gekennzeichnet, dass** zum Überspritzen klares Kunststoffmaterial transparent eingefärbt verwendet wird.

9. Verfahren nach Anspruch 1, **dadurch gekennzeichnet, dass** ausgewählte Ausstanzungen (6) aus der Folie (2) als Öffnungen für elektromagnetische Wellen von Sensoren verwendet werden.

## Claims

1. Method for manufacturing components (1) of an outer skin of a vehicle with a film (2), which is back-moulded at least from one side - front side (V) or rear side (R) - with clear plastics material, wherein the film (2) is subjected to a thermoforming process in order to generate the desired three-dimensional form, and the film (2) is subjected to further steps for preparation of the back-moulding,
- wherein the film (2) is at least partially provided with a colour layer (3),
- and the film (2) comprises regions (4) through which other colours are intended to show or electromagnetic waves are intended to pass and which consist of specially embossed geometries, such as indentations, elevations, wherein the regions (4) are prepared by punched-out portions (6) from the film (2),
- wherein the prepared coloured film (2) with its punched-out portions (6) is first overmoulded with a glass-clear plastics layer (7), in which the specially embossed geometries are then present,
- and components (5) which have a coloured or luminous visual appearance towards the outside are inserted into the punched-out portions (6), wherein the components (5) show through punched-out portions (6) of the film (2) and of the glass-clear injection-moulded encapsulation of the film (2) and can be seen from the outside, that is to say from the front side (V).

2. Method according to Claim 1, **characterized in that** the film (2) is provided with a colour layer (3) prior to or after the thermoforming operation.

3. Method according to Claim 1, **characterized in that** the film (2) is a metallized film.

4. Method according to Claim 3, **characterized in that** the regions (4) are formed by selective printing of the film (2) with colour.

5. Method according to Claim 4, **characterized in that** components (5) are connected to the film (2) in the regions (4).

6. Method according to Claim 1 or 5, **characterized in that** glass-clear adhesive (8) is used to connect the components (5) to the film (2), at least in the regions (4).

7. Method according to Claim 1 or 5, **characterized in that** the components (5) are connected to the film (2) by overmoulding with a clear plastics material in a PC or PMMA layer (7).

8. Method according to Claim 4 or 5, **characterized in that** clear plastics material of transparent colouring is used for the overmoulding operation.

9. Method according to Claim 1, **characterized in that** selected punched-out portions (6) from the film (2) are used as openings for electromagnetic waves of sensors.

## Revendications

1. Procédé de fabrication de composants (1) d'une tôle extérieure d'un véhicule comportant une feuille (2) sur laquelle une matière plastique claire est moulée par injection par l'arrière au moins à partir d'un côté - le côté avant (V) ou le côté arrière (R) -, la feuille (2) étant soumise à un processus d'emboutissage profond, afin de produire la forme tridimensionnelle souhaitée et la feuille (2) étant soumise à d'autres étapes pour la préparation du moulage par injection par l'arrière,
- la feuille (2) étant pourvue au moins partiellement d'une couche de couleur (3),
- et la feuille (2) présentant des régions (4) qui sont prévues pour l'apparition par transparence d'autres couleurs ou la pénétration d'ondes électromagnétiques, et qui sont constituées de géométries gaufrées spécialement, telles que des dépressions, des rehaussements, les régions (4) étant préparées par des découpages (6) dans la feuille (2),
- la feuille (2) colorée préparée étant tout d'abord surmoulée avec une couche de matière plastique (7) claire comme du verre avec ses découpages (6), couche dans laquelle les géométries gaufrées spécialement sont alors présentes,
- et dans les découpages (6) sont insérés des composants (5) qui donnent un aspect coloré ou lumineux vers l'extérieur, les composants (5) transparaissant à travers des découpages (6) de la feuille (2) ainsi que le surmoulage clair comme du verre de la feuille (2) et étant visibles depuis l'extérieur, c'est-à-dire depuis le côté avant (V).

2. Procédé selon la revendication 1, **caractérisé en ce que** la feuille (2) est pourvue d'une couche de couleur (3) avant ou après l'emboutissage profond.

3. Procédé selon la revendication 1, **caractérisé en ce que** la feuille (2) est une feuille métallisée.

4. Procédé selon la revendication 3, **caractérisé en ce que** les régions (4) sont réalisées par impression sélective de la feuille (2) avec des couleurs.

5. Procédé selon la revendication 4, **caractérisé en ce que** des composants (5) sont reliés à la feuille (2) dans les régions (4).

6. Procédé selon la revendication 1 ou 5, **caractérisé en ce que** les composants (5) sont reliés à la feuille (2) au moins au niveau des régions (4) à l'aide d'un adhésif (8) clair comme du verre.

7. Procédé selon la revendication 1 ou 5, **caractérisé en ce que** les composants (5) sont reliés à la feuille (2) par surmoulage avec une matière plastique claire dans une couche en PC ou PMMA (7).

8. Procédé selon la revendication 4 ou 5, **caractérisé en ce que** pour le surmoulage une matière plastique claire est utilisée de manière colorée de façon transparente.

9. Procédé selon la revendication 1, **caractérisé en ce que** des découpages (6) sélectionnés dans la feuille (2) sont utilisés comme ouvertures pour des ondes électromagnétiques provenant de capteurs.
